# FASCICULE DE BREVET EUROPEEN

(11) **EP 3 667 436 B1**
(45) Date de publication et mention de la délivrance du brevet: **04.05.2022**
(21) Numéro de dépôt: 18212786.0
(22) Date de dépôt: 14.12.2018
(51) Int. Cl.: G04C 17/00, G04G 9/00, G04B 19/28, G04B 19/30

(54) **PIECE D'HORLOGERIE COMPRENANT UN ELEMENT MOBILE MUNI D'UN INDEX LUMINEUX**
UHR, DIE EIN BEWEGLICHES ELEMENT MIT LEUCHTINDEX UMFASST
TIMEPIECE INCLUDING A MOBILE ELEMENT PROVIDED WITH A LIGHT SPOT

(43) Date de publication de la demande: 17.06.2020
(73) Titulaire: The Swatch Group Research and Development Ltd, 2074 Marin (CH)
(72) Inventeur: TORTORA, Pierpasquale, 2000 Neuchâtel (CH); BLATTER, Cédric, 1291 Commugny (CH)
(74) Mandataire: ICB SA

(56) Documents cités:
- EP-A1- 2 950 166
- EP-A1- 2 950 168
- CH-A2- 701 301
- US-A1- 2013 083 508

## Description

### DOMAINE TECHNIQUE DE L'INVENTION

L'invention concerne une pièce d'horlogerie, notamment une montre, comprenant un élément mobile muni d'un index lumineux. La pièce d'horlogerie est, par exemple, configurée pour pouvoir être immergée dans l'eau de mer, telle une montre de plongée.

### ETAT DE LA TECHNIQUE

Dans le domaine des pièces d'horlogerie comprenant une boîte munie d'une carrure, il est connu de prévoir sur la carrure un élément mobile muni d'au moins un index lumineux. Par exemple, dans le cas d'une montre de plongée, l'élément mobile peut être une lunette tournante, et l'index permet, par exemple, d'indiquer une position de référence pour la mesure par le plongeur de son temps d'immersion en mer. Pour ce faire, le plongeur tourne la lunette de manière à aligner l'index avec l'aiguille des minutes. Cette position devient alors la référence pour mesurer le temps écoulé. Un des critères d'efficacité principaux d'une montre de plongée doit être la lisibilité de l'heure et de l'index pendant la phase d'immersion.

Afin de répondre à cette contrainte, une solution connue consiste à recouvrir l'index de la lunette, ainsi que les aiguilles de la montre, d'une matière phosphorescente. Ceci permet de rendre l'index et les aiguilles plus visibles dans des conditions de faible luminosité, typiquement à quelques mètres sous l'eau. Une telle montre de plongée est par exemple décrite dans la demande de brevet FR 1 572 837 A. Toutefois, l'index a une surface beaucoup plus petite que les aiguilles, de sorte qu'il reste beaucoup moins visible dans l'eau que les aiguilles, même avec de la matière phosphorescente. En outre, les éléments phosphorescents émettent de la lumière durant une durée limitée à quelques heures et de façon décroissante (type de phosphore, quantité, durée et intensité de la charge avant plongée). De plus, cette solution impose de charger préalablement les éléments phosphorescents à la lumière du soleil ou auprès d'une source de lumière artificielle.

Il est également connu des montres comprenant un cadran muni de plusieurs index lumineux, permettant la lecture d'une information située sur le cadran dans l'obscurité aussi bien qu'en plein jour.

Une telle montre est par exemple décrite dans la demande de brevet WO 2016146350 A1. La montre comprend une boîte de montre, une lunette tournante montée sur la boîte de montre et un cadran muni de plusieurs index lumineux. Les index lumineux sont éclairés à travers le cadran par une source de lumière disposée sous le cadran et alimentée par une source d'énergie électrique telle qu'une pile ou un accumulateur rechargeable. Un composant d'activation de la source de lumière est logé dans la lunette tournante et coopère avec un composant de détection logé dans la boîte de montre. Ainsi, l'utilisateur peut commander l'allumage de la source de lumière en faisant pivoter la lunette tournante et en l'amenant dans une position prédéterminée dans laquelle la présence du composant d'activation est détectée par le composant de détection qui, en réponse, commande l'allumage de la source de lumière ; la lunette agit là comme un interrupteur.

Cependant, la source de lumière ne permet pas d'illuminer un index qui est agencé sur la lunette, car la lumière n'atteint pas la lunette, qui est généralement agencée sur la carrure de la boîte et non sur le cadran. En outre, il n'est pas possible de disposer une source de lumière dans la lunette sans avoir des problèmes de connexions avec l'alimentation électrique de la source de lumière. En effet, dans une telle configuration, la source de lumière est mobile avec la lunette, tandis que l'alimentation reste fixe dans le boîtier. De plus, en immersion, l'eau s'infiltre entre la lunette et la carrure, ce qui pourrait provoquer un court-circuit au niveau de la Z connexion.

Les demandes de brevet EP 2 950 168 A1 et US 2013/0083508 A1 décrivent des aiguilles d'affichage lumineuses.

Le document CH 701 301 A2 décrit une lunette transparente éclairée par de la lumière diffusée par un guide de lumière annulaire.

### RÉSUMÉ DE L'INVENTION

L'invention a donc pour but de fournir une pièce horlogère comprenant un élément mobile muni d'un index, l'index pouvant être éclairé par une source de lumière dans des conditions de faible luminosité, notamment sous l'eau. En particulier l'élément mobile est simple d'utilisation, et ne nécessite pas de charge préalable d'éléments phosphorescents, ni d'avoir recours à une source de lumière mobile associée à l'élément mobile.

A cet effet, l'invention concerne une pièce d'horlogerie, notamment une montre de plongée, comprenant une boîte munie d'une carrure, une source lumineuse, un élément mobile entre plusieurs positions par rapport à la boîte, et des moyens d'assemblage mobiles de l'élément mobile sur la carrure de la boîte.

Selon l'invention, l'élément mobile comprend un guide de lumière et une couverture supérieure comportant un index, le guide étant configuré pour recevoir un faisceau lumineux de la source de lumière par une face d'entrée, et pour guider des rayons lumineux à travers une face de sortie du guide de lumière afin d'éclairer l'index, quelle que soit la position de l'élément mobile par rapport à la boîte, l'élément mobile étant une lunette annulaire montée à rotation autour de la carrure.

Des formes particulières de la montre sont définies dans les revendications dépendantes 2 à 16.

Un avantage d'une telle montre, selon l'invention, réside dans l'utilisation d'un guide de lumière dans l'élément mobile. Le guide de lumière permet de guider un faisceau lumineux produit par une source de lumière jusqu'à l'index pour que l'index soit vu, en particulier dans un milieu obscur. On obtient un tel résultat quelle que soit la position de l'élément mobile par rapport à la boîte de la pièce d'horlogère, ainsi que celle de la source de lumière. En effet, le guide de lumière étant mobile avec l'index, il peut guider la lumière jusqu'à l'index dans n'importe quelle position de l'élément mobile sur la carrure de la boîte.

Ceci offre une solution particulièrement simple permettant d'éclairer l'index dans des conditions de faible luminosité sous l'eau, sans nécessiter de charge préalable de l'index.

En outre, cela permet à l'élément mobile, par exemple une lunette de montre de plongée, de prendre différentes positions tout en gardant l'index illuminé par une source de lumière agencée à un endroit déterminé de la pièce horlogère. On évite d'avoir recours à une source de lumière mobile, qui devrait être disposée sous ou dans l'élément mobile, ce qui induirait des problèmes de connexion pour alimenter la source. Les dimensions de l'élément mobile seraient en plus impactées si une source de lumière était intégrée à l'élément mobile.

Cette configuration offre aussi plusieurs possibilités de positionnement de la source de lumière et de l'élément dans ou sur la boîte de la pièce horlogère. Ainsi, on peut gagner de la place en évitant d'avoir à placer la source lumineuse directement à proximité de l'index.

Selon une caractéristique technique particulière de l'invention, le guide de lumière a une forme d'anneau fermé présentant une face inférieure plane formant la face d'entrée du guide et s'étendant sous l'anneau entier. Ainsi, on obtient une illumination sensiblement constante de l'index quelle que soit la position de l'élément mobile sur la carrure, car les rayons lumineux sont guidés dans l'anneau par les deux côtés de l'anneau, jusqu'à l'index. Les pertes de luminosité d'un côté sont compensées par l'autre côté.

Avantageusement, le guide de lumière a une section rectangulaire, les faces du guide réfléchissant des rayons lumineux pour les guider vers l'index.

Avantageusement, le guide de lumière a une section circulaire, les faces du guide réfléchissant des rayons lumineux pour les guider vers l'index.

Avantageusement, le guide comporte une face supérieure liée à la couverture supérieure, de préférence en contact permanent avec la couverture supérieure.

Selon un mode de réalisation préférentiel de l'invention, la face de sortie est une partie de la face supérieure du guide en regard de l'index.

Avantageusement, la source de lumière est agencée en regard d'une partie de la face d'entrée, le faisceau de lumière étant destiné à être projeté de la source autour d'un axe sensiblement perpendiculaire à la face d'entrée.

Selon une caractéristique technique particulière de l'invention, le guide comprend une structure de déviation de la lumière agencée sous l'index pour dévier une partie du faisceau lumineux vers l'index.

Avantageusement, la structure de déviation comprend des prismes formés dans la face inférieure du guide.

Avantageusement, les prismes présentent une surface à quarante-cinq degrés par rapport à la face de sortie du guide de lumière pour dévier les rayons lumineux.

Avantageusement, les prismes présentent une surface parabolique ou concave pour dévier les rayons lumineux.

Selon un mode de réalisation préférentiel de l'invention, le guide de lumière comprend des pigments fluorescents et / ou phosphorescents afin de former une source secondaire à l'intérieur du guide.

Selon une caractéristique technique particulière de l'invention, le guide de lumière est formé d'un matériau monobloc.

Avantageusement, le matériau monobloc est recouvert d'une couche de type « cladding », la couche ayant un indice de réfraction plus faible que celui du matériau, afin d'éviter les pertes de lumière.

Selon une caractéristique technique particulière de l'invention, le guide de lumière est formé d'au moins deux blocs, les pigments fluorescents et / ou phosphorescents étant disposés entre les blocs.

Selon un mode de réalisation préférentiel de l'invention, la source de lumière est agencée dans la carrure de la boîte à une place permanente par rapport à la boîte.

Avantageusement, le guide lumière est agencé au moins en partie entre la source de lumière et la couverture supérieure.

Selon une caractéristique technique particulière de l'invention, l'élément mobile comprend un filtre agencé pour atténuer la luminosité ou modifier le spectre de couleur selon les positions de l'élément, le filtre étant de préférence disposé entre la source et le guide de lumière.

Selon une caractéristique technique particulière de l'invention, l'index est formé d'une ouverture ménagée dans la couverture supérieure pour permettre le passage de la lumière de la face de sortie du guide en dehors de l'élément mobile, ladite ouverture étant de préférence munie d'une fenêtre. De préférence, la fenêtre est réalisée en saphir.

Avantageusement, au moins une des surfaces libres du saphir est dépolie. Ceci permet de mieux diffuser la lumière émise par le dispositif de source de lumière et d'augmenter l'angle de vue de l'index illuminé.

Avantageusement, la montre comprend en outre un actionneur externe ou un détecteur d'immersion pour déclencher l'éclairement de l'index.

Avantageusement, l'index est configuré pour clignoter pour indiquer un moment important ou la fin d'une durée prédéfinie.

### BRÈVE DESCRIPTION DES FIGURES

Les buts, avantages et caractéristiques de la pièce d'horlogerie selon l'invention apparaîtront mieux dans la description suivante sur la base d'au moins une forme d'exécution non limitative illustrée par les dessins sur lesquels :
- la figure 1 est une vue de dessus d'une pièce d'horlogerie, ici une montre, selon un mode de réalisation préférentiel de l'invention, la pièce d'horlogerie comprenant une lunette, munie d'un index ;
- la figure 2 est une vue en coupe de l'intérieur de la montre de la figure 1, selon un mode de réalisation préférentiel de l'invention, la montre comprenant un élément mobile et une source lumineuse ;
- la figure 3 est une vue de dessus d'un guide de lumière d'un élément mobile de la montre de la figure 1 ;
- la figure 4 est une représentation schématique du trajet des rayons lumineux dans le guide de lumière et de leur sortie à travers la face de sortie et l'index ;
- la figure 5 est une vue en coupe de l'intérieur de la montre de la figure 1, lorsque l'index est placé directement au-dessus de la source lumineuse ;
- la figure 6 est une vue en coupe de l'intérieur de la montre de la figure 1, lorsqu'une source secondaire est créée dans le guide de lumière par la source lumineuse et les pigments fluorescents et/ou phosphorescents
- la figure 7 est une vue en coupe de l'intérieur d'une montre selon un deuxième mode de réalisation dans lequel le guide de lumière est formé de deux blocs.
- la figure 8 est une vue en coupe de l'intérieur d'une montre selon un troisième mode de réalisation, dans lequel l'élément mobile comprend un filtre de lumière.

### DESCRIPTION DETAILLEE DE L'INVENTION

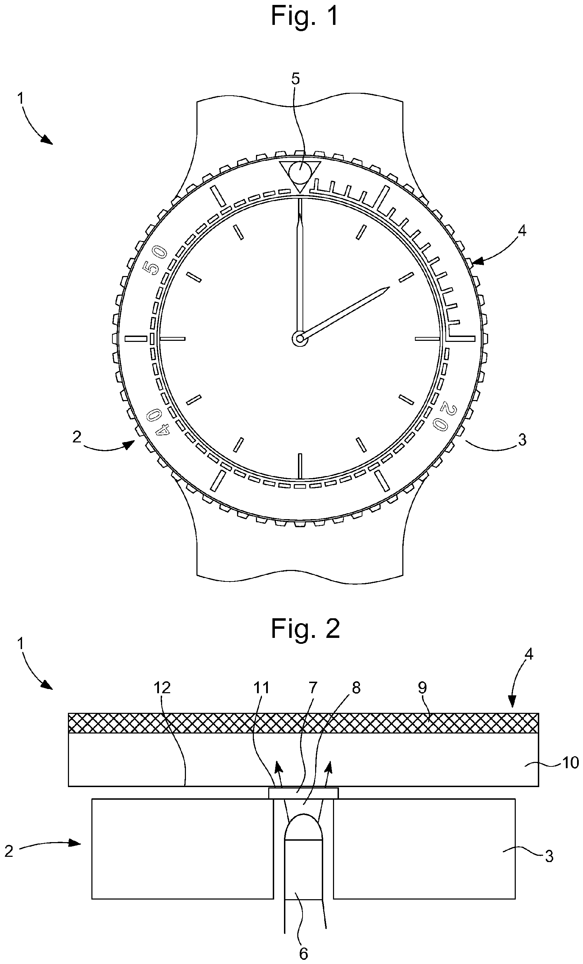

Les figure 1 et 2 représentent une pièce d'horlogerie 1, notamment une montre de plongée, munie d'une boîte de montre 2. La boîte de montre 2 comprend une carrure 3 portant un élément mobile 4 mobile entre plusieurs positions par rapport à la boîte 2. L'élément mobile 4 comprend des moyens d'assemblage mobiles de l'élément sur la carrure, non représentés sur les figures. Les moyens d'assemblage permettent à l'élément mobile de bouger dans les différentes positions tout en restant attaché à la carrure 3 de la boîte 2. Dans l'exemple illustratif de la figure 1 où l'élément 4 est une lunette tournante annulaire, l'élément mobile 4 est muni d'au moins un index lumineux 5.

Dans les modes de réalisation illustrés sur les figures 1 à 8, l'élément mobile 4 est une lunette tournante annulaire montée à rotation autour de la carrure 3. La lunette tournante est par exemple clippée sur la carrure 3 en recouvrant cette dernière, les moyens de fixation mobiles étant formés de clips de fixation. Dans l'exemple illustratif de la figure 1, la montre 1 est une montre de plongée et la lunette tournante comporte un seul index 5. L'index 5 est un index lumineux permettant de constituer une position référence, par exemple pour la mesure par le plongeur de son temps d'immersion dans l'eau.

L'index 5 est par exemple formé d'une ouverture ménagée dans l'élément mobile 4 pour permettre le passage de la lumière. L'ouverture est de préférence fermée par un élément de fermeture ou fenêtre apte à laisser passer la lumière. De préférence, la fenêtre est réalisée en saphir. De préférence encore, au moins une des surfaces libres de la fenêtre, en l'occurrence du saphir est dépolie.

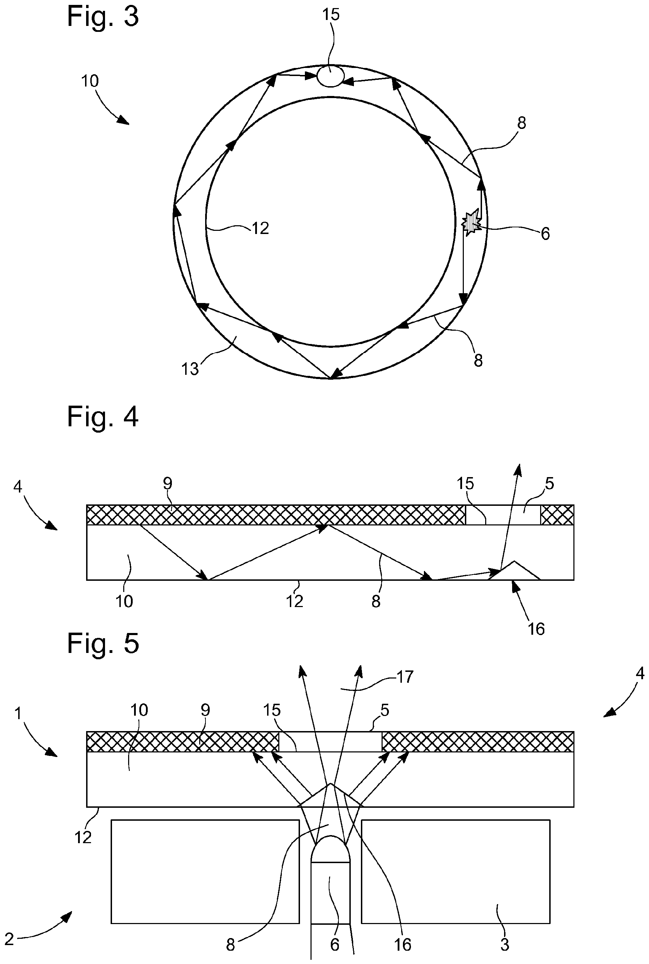

Comme représenté sur la figure 2, ainsi que sur les figures 5 à 8, la pièce d'horlogerie 1 comprend une source lumineuse 6 configurée pour émettre un faisceau lumineux 8. La source de lumière 6 est agencée dans la carrure 3 de la boîte 2 à une place fixe déterminée. L'élément mobile 4 est par conséquent également mobile par rapport à la source de lumière 6. Dans l'exemple illustratif des figures 2 et 4 à 8, la source de lumière 6 comprend une seule diode électroluminescente. On notera en outre que la source de lumière selon l'invention est énergétiquement autonome de sorte qu'elle peut équiper aussi bien une montre comportant un mouvement mécanique qu'une montre comportant un mouvement électronique ou hybride. Enfin, l'utilisation d'une LED comme source de lumière préférée pour signaler l'index de plongée permet avantageusement de choisir la couleur de celle-ci, car la gamme de couleurs des LED couvre une large palette contrairement aux matières phosphorescentes qui sont toujours orange, vert ou bleu clair. Une personne qui plonge habituellement dans une eau bleue aura intérêt à choisir une LED de couleur jaune afin d'avoir un maximum de contraste. De même, une personne qui plonge habituellement dans une eau verdâtre pourra choisir avantageusement une LED de couleur rouge. La source de lumière 6 peut en outre comporter une résistance connectée en série de la diode électroluminescente. Une telle résistance, non représentée sur les figures, est destinée à limiter le courant circulant au sein de la diode électroluminescente et ainsi à protéger cette dernière. Ceci permet de garantir un courant constant dans le circuit de la diode électroluminescente. La source de lumière 6 est avantageusement munie d'une fenêtre étanche 7 pour la protéger de l'eau de mer, la fenêtre étant portée par carrure 3. La source lumineuse 6 permet l'illumination de l'index grâce à la configuration de l'élément mobile 4.

A cette fin, l'élément mobile 4 comprend une couverture supérieure 9 comportant l'index et un guide de lumière 10 associé à la couverture supérieure 9. La couverture 9 et le guide de lumière 10 sont superposés, de sorte que le guide 10 est disposé entre la carrure 3 de la boîte 2 et la couverture 9. Ainsi, le guide lumière 10 est agencé au moins en partie entre la source de lumière 6 et la couverture supérieure 9. La couverture supérieure 9 est de préférence en métal ou en céramique. Le guide 10 est configuré pour recevoir le faisceau lumineux 8 de la source de lumière 6 par une face d'entrée 12, et pour amener des rayons lumineux 18 vers l'index à travers une face de sortie.

L'élément mobile 4 est circulaire et tourne autour d'un axe de rotation, de préférence passant par le centre de la pièce horlogère. La source de lumière 6 est agencée à une certaine distance du centre de l'anneau circulaire, cette distance étant sensiblement égale au rayon de l'anneau circulaire. Ainsi, lorsque l'élément mobile 4 change de position, il présente toujours une partie du guide de lumière 10 au-dessus de la source lumineuse 6. La source de lumière 6 est agencée en regard d'une partie 11 de la face d'entrée 12, le faisceau de lumière 8 étant destiné à être projeté de la source autour d'un axe sensiblement perpendiculaire à la face d'entrée 12 quelle que soit la position de l'élément mobile. Sur la figure 3, le guide de lumière 10 est donc également circulaire. Ainsi, quelle que soit la position de l'élément mobile par rapport à la boîte, le guide 10 amène des rayons lumineux 18 vers l'index. Pour cela, le guide de lumière 10 a une forme d'anneau fermé.

Dans une première variante de réalisation, le guide 10 a une section rectangulaire, de sorte que les faces du guide réfléchissent les rayons lumineux 18 pour les diriger jusqu'à l'index 5. Le guide de lumière 10 est doté d'une face inférieure plane formant la face d'entrée 12 du guide, et s'étendant sous l'anneau entier, et une face supérieure 13. Quelle que soit la position de l'élément mobile, la source de lumière est en regard d'au moins une partie de la face d'entrée du guide. La face supérieure 13 est liée à la couverture supérieure, de préférence par des moyens de fixation permanents. La face supérieure 13 est de préférence également plane. La face d'entrée 12 du guide est donc opposée à la face supérieure 13. La face de sortie 15 du guide 10 est formée par une partie de la face supérieure 13 du guide en regard de l'ouverture de l'index. La face de sortie 15 du guide est la même quelle que soit la position de l'élément mobile 4.

Dans une deuxième variante de réalisation, non représenté sur les images, le guide de lumière a une section circulaire, les faces du guide réfléchissant des rayons lumineux pour les guider vers l'index.

Comme cela est représenté sur les figures 4 et 5, le guide 10 comprend une structure de déviation 16 de la lumière pour dévier vers l'index 5 au moins une partie des rayons lumineux 18 se propageant à l'intérieur du guide 10, et permettre ainsi leur passage à travers la face de sortie 15 du guide 10 et de l'index 5 de la couverture supérieure 9, en dehors de l'élément mobile 4. Par exemple, la structure de déviation 16 comprend des prismes formés sur la face d'entrée 12 du guide 10. Les prismes ont une forme de renfoncement de la face inférieure. Ainsi, lorsqu'une partie des rayons lumineux 18 rencontre les prismes, elle est déviée vers l'index 5. Les prismes ont de plus pour fonction de diminuer la taille du faisceau 8 projeté par la source directement vers l'index lorsque l'élément mobile 4 est dans une position plaçant l'index au-dessus de la source de lumière 6. On voit cet effet sur la figure 5, où seule une partie centrale 17 du faisceau 8 passe à travers le guide 10 pour atteindre l'index 5. L'autre partie du faisceau est dévié dans le guide et n'atteint pas l'index 5. On évite de la sorte une différence d'intensité de l'index 5 entre cette position précise et les autres positions que peut prendre l'élément mobile 4. On peut aussi déposer une couche métallique sur une partie du prisme pour empêcher une partie du faisceau de passer, le sommet du prisme étant découvert pour permettre le passage d'une partie du faisceau.

Dans une première variante de réalisation, les prismes présentent une surface à quarante-cinq degrés par rapport à la face de sortie 15 du guide de lumière 10 pour dévier les rayons lumineux 18.

Dans une deuxième variante de réalisation, non représentée sur les figures, les prismes présentent une surface parabolique ou concave pour dévier les rayons lumineux.

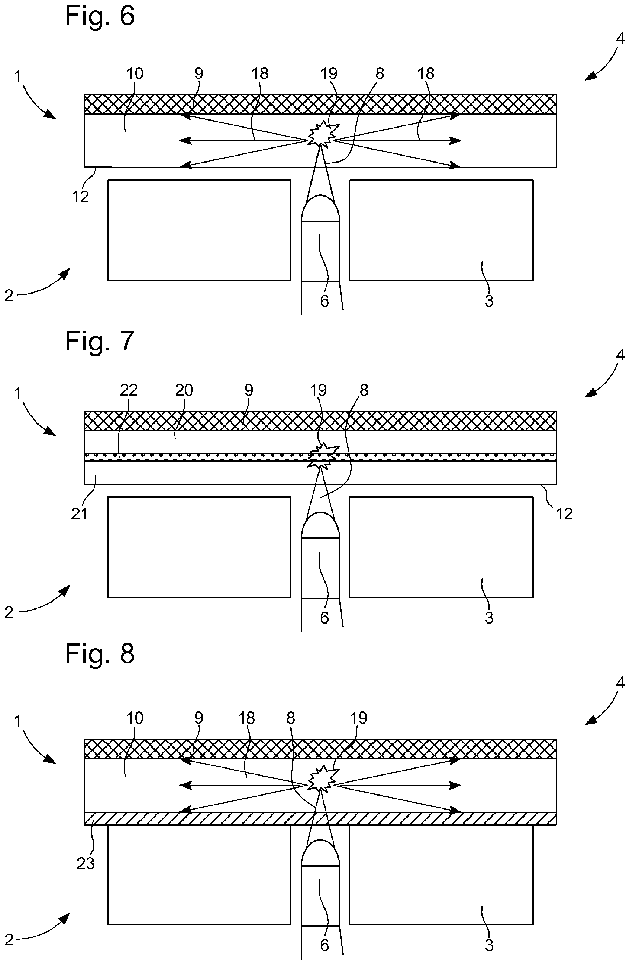

Dans un mode de réalisation préférentiel de l'invention, le guide de lumière 10 comprend des pigments fluorescents et/ou phosphorescents. Comme on le voit sur la figure 6, les pigments fluorescents et/ou phosphorescents sont illuminés par la source de lumière 6 et réémettent des rayons lumineux 18 dans toutes les directions. On forme ainsi une source secondaire 19 à l'intérieur du guide de lumière 10. Les rayons lumineux 18 dont l'angle d'incidence sur les faces du guide 10 correspond à une valeur prédéfinie sont réfléchis et se propagent dans le guide 10. Ce sont les rayons lumineux 18 réémis par les pigments lumineux, qui vont illuminer l'index dans ce mode de réalisation. La valeur prédéfinie est déterminée par la nature des matériaux, en particulier de leurs indices de réfraction.

Selon le premier mode de réalisation de l'invention, le guide de lumière 10 est monobloc, c'est-à-dire qu'il est réalisé d'un seul tenant. Les pigments sont mélangés dans la masse du matériau formant le guide de lumière. Avantageusement, le guide de lumière 10 monobloc est recouvert d'une couche de type « cladding », la couche ayant, de préférence, un indice de réfraction plus faible que celui du matériau, afin d'éviter les pertes de lumière.

Selon un deuxième mode de réalisation de l'invention, représenté sur la figure 7, le guide de lumière 10 est formé d'au moins deux blocs, ici deux blocs 20, 21, assemblés. Chaque bloc 20, 21 a, par exemple, une forme d'anneau plat, les deux anneaux étant superposés pour former le guide de lumière 10. Les pigments sont insérés à l'interface entre les deux blocs 20, 21 avant leur assemblage. On obtient par conséquent une couche fluorescente et/ou phosphorescente 22 entre les deux blocs 20, 21, qui permet d'engendrer une source secondaire lorsqu'une partie de la couche est éclairée par la source lumineuse 6. Avantageusement, le guide de lumière 10 monobloc est recouvert d'une couche de type « cladding », la couche ayant, de préférence, un indice de réfraction plus faible que celui du matériau, afin d'éviter les pertes de lumière.

Selon une variante du premier et du deuxième mode de réalisation, la concentration en pigments varie dans le guide pour obtenir une luminosité différente de l'index en fonction de la position de l'élément mobile sur la boîte.

Selon une autre variante du premier et du deuxième mode de réalisation, on utilise des pigments de couleurs différentes dans le guide afin d'obtenir une couleur différente de l'index en fonction de la position de l'élément mobile sur la boîte. Ainsi, la couleur de l'index permet de reconnaître facilement sa position par rapport à la boîte.

Dans un troisième mode de réalisation de l'invention, représenté sur la figure 8, l'élément mobile 10 comprend un filtre 23. De préférence, le filtre 23 est disposé entre la source 6 et le guide de lumière 10. Le filtre 23 est, par exemple, un anneau circulaire fixé sous le guide 10.

Dans une première variante de réalisation, le filtre 23 permet d'atténuer la luminosité selon les positions que peut prendre l'élément mobile 4. Le filtre 23 est, de préférence, non homogène pour obtenir une luminosité différente selon les positions de l'élément mobile.

Dans une deuxième variante de réalisation, le filtre 23 permet de modifier le spectre selon les positions que peut prendre l'élément mobile 4. Ainsi, la luminosité a des couleurs différentes selon les positions que peut prendre l'élément mobile 4.

De préférence encore, la pièce d'horlogerie peut également comprendre selon une variante un actionneur externe, l'actionneur n'étant pas visible sur les figures pour des raisons de clarté. L'actionneur externe est par exemple formé d'un bouton poussoir. Ainsi, en pressant le bouton poussoir, on provoque l'illumination de l'index.

Dans une variante, la pièce d'horlogerie peut également comprendre un détecteur d'immersion pour déclencher automatiquement l'éclairement de l'index. Ainsi, dès que la pièce d'horlogerie est immergée, la source de lumière s'allume et provoque l'illumination de l'index.

Avantageusement, l'index est configuré pour clignoter pour indiquer un moment important ou la fin d'une durée prédéfinie. Par exemple, lorsqu'il faut remonter à la surface lors d'une plongée sous-marine car la quantité d'air dans les bouteilles ne sera pas suffisantes plus longtemps, l'index clignote pour prévenir le plongeur.

La description précédente de la montre selon l'invention a été faite en référence à un élément muni d'un seul index et en référence à une seule source de lumière. Toutefois, l'homme du métier comprendra que l'invention s'applique de la même manière à des montres comprenant une pluralité d'index, voire avec plusieurs sources de lumière.

## Revendications

1. Pièce d'horlogerie (1), notamment une montre de plongée, comprenant une boîte (2) munie d'une carrure (3), une source lumineuse (6), un élément mobile (4) entre plusieurs positions par rapport à la boîte (2), et des moyens d'assemblage mobiles de l'élément mobile (4) sur la carrure (3) de la boîte (2), l'élément mobile (4) comprenant un guide de lumière (10) et une couverture supérieure (9) comportant un index (5), le guide (10) étant configuré pour recevoir un faisceau lumineux (8) de la source de lumière par une face d'entrée (12), et pour guider des rayons lumineux (18) à travers une face de sortie (15) du guide de lumière (10) afin d'éclairer l'index (5), quelle que soit la position de l'élément mobile (4) par rapport à la boîte (2), l'élément mobile (4) étant une lunette annulaire montée à rotation autour de la carrure (3).

2. Pièce d'horlogerie (1) selon la revendication 1, **caractérisée en ce que** l'index (5) est formé d'une ouverture ménagée dans la couverture supérieure (9) pour permettre le passage de la lumière de la face de sortie (15) du guide (10) en dehors de l'élément mobile (4), ladite ouverture étant de préférence munie d'une fenêtre.

3. Pièce d'horlogerie (1) selon la revendication 1 ou 2, **caractérisée en ce que** le guide de lumière (10) a une forme d'anneau fermé présentant une face inférieure formant la face d'entrée (12) du guide (10) et s'étendant sous l'anneau entier.

4. Pièce d'horlogerie (1) selon la revendication 3, **caractérisée en ce que** le guide de lumière (10) a une section rectangulaire, les faces du guide (10) réfléchissant des rayons lumineux (18) pour les guider vers l'index (5).

5. Pièce d'horlogerie (1) selon la revendication 3, **caractérisée en ce que** le guide de lumière (10) a une section circulaire, les faces du guide (10) réfléchissant des rayons lumineux (18) pour les guider vers l'index (5).

6. Pièce d'horlogerie (1) selon la revendication 4 ou 5, **caractérisée en ce que** le guide (10) comporte une face supérieure (13) liée à la couverture supérieure (9), de préférence en contact permanent avec la couverture supérieure (9).

7. Pièce d'horlogerie (1) selon la revendication 6, **caractérisée en ce que** la face de sortie (15) est une partie de la face supérieure (13) du guide (4) en regard de l'index (5).

8. Pièce d'horlogerie (1) selon l'une quelconque des revendications 3 à 7, **caractérisée en ce que** la source de lumière (6) est agencée en regard d'une partie de la face d'entrée (12), le faisceau de lumière (8) étant destiné à être projeté de la source (6) autour d'un axe sensiblement perpendiculaire à la face d'entrée (12).

9. Pièce d'horlogerie (1) selon l'une quelconque des revendications précédentes, **caractérisée en ce que** le guide (10) comprend une structure de déviation (16) de la lumière agencée sous l'index (5) pour dévier une partie des rayons lumineux (18) vers l'index (5).

10. Pièce d'horlogerie (1) selon la revendication 9 dans la dépendance de la revendication 3, **caractérisée en ce que** la structure de déviation (16) comprend des prismes formés dans la face inférieure (12) du guide (10).

11. Pièce d'horlogerie (1) selon l'une quelconque des revendications précédentes, **caractérisée en ce que** le guide de lumière (10) comprend des pigments fluorescents et/ou phosphorescents afin de former une source secondaire (19) à l'intérieur du guide (10).

12. Pièce d'horlogerie (1) selon l'une quelconque des revendications précédentes, **caractérisée en ce que** le guide de lumière (10) est formé d'un matériau monobloc.

13. Pièce d'horlogerie (1) selon la revendication 11, **caractérisée en ce que** le guide de lumière (10) est formé d'au moins deux blocs (20, 21), les pigments fluorescents et/ou phosphorescents étant disposés entre les blocs (20, 21).

14. Pièce d'horlogerie (1) selon l'une quelconque des revendications précédentes, **caractérisée en ce que** la source de lumière (6) est agencée dans la carrure (3) de la boîte (2) à une place permanente par rapport à la boîte (2).

15. Pièce d'horlogerie (1) selon l'une quelconque des revendications précédentes, **caractérisée en ce que** le guide de lumière (10) est agencé au moins en partie entre la source de lumière (6) et la couverture supérieure (9).

16. Pièce d'horlogerie (1) selon l'une quelconque des revendications précédentes, **caractérisée en ce que** l'élément mobile (4) comprend un filtre (23) agencé pour atténuer la luminosité ou modifier le spectre de couleur selon les positions de l'élément (4), le filtre étant de préférence disposé entre la source (6) et le guide de lumière (10).

## Patentansprüche

1. Uhr (1), insbesondere eine Taucheruhr, die ein Gehäuse (2) umfasst, das mit einem Mittelteil (3), einer Lichtquelle (6), einem in Bezug auf das Gehäuse (2) zwischen mehreren Stellungen beweglichen Element (4) und beweglichen Mitteln zum Montieren des beweglichen Elements (4) auf dem Mittelteil (3) des Gehäuses (2) ausgestattet ist, wobei das bewegliche Element (4) einen Lichtleiter (10) und eine obere Abdeckung (9) mit einem Index (5) umfasst, wobei der Leiter (10) so ausgelegt ist, dass er durch eine Eintrittsseite (12) ein Lichtbündel (8) aus der Lichtquelle empfangen und Lichtstrahlen (18) durch eine Austrittsseite (15) des Lichtleiters (10) hindurch leiten kann, um den Index (5) unabhängig von der Stellung des beweglichen Elements (4) in Bezug auf das Gehäuse (2) zu beleuchten, wobei es sich bei dem beweglichen Element (4) um eine ringförmige Lünette handelt, die um das Mittelteil (3) herum drehbar angebracht ist.

2. Uhr (1) nach Anspruch 1, **dadurch gekennzeichnet, dass** der Index (5) von einer Öffnung gebildet wird, die in der oberen Abdeckung (9) ausgestaltet ist, um den Durchtritt des Lichts von der Austrittsseite (15) des Leiters (10) aus dem beweglichen Element (4) hinaus zu ermöglichen, wobei die Öffnung vorzugsweise mit einem Fenster ausgestattet ist.

3. Uhr (1) nach Anspruch 1 oder 2, **dadurch gekennzeichnet, dass** der Lichtleiter (10) die Form eines geschlossenen Rings mit einer Unterseite aufweist, welche die Eintrittsseite (12) des Leiters (10) bildet und sich unter dem gesamten Ring erstreckt.

4. Uhr (1) nach Anspruch 3, **dadurch gekennzeichnet, dass** der Lichtleiter (10) einen rechteckigen Querschnittaufweist, wobei die Seiten des Leiters (10) Lichtstrahlen (18) reflektieren, um sie in Richtung des Indexes (5) zu leiten.

5. Uhr (1) nach Anspruch 3, **dadurch gekennzeichnet, dass** der Lichtleiter (10) einen kreisrunden Querschnitt aufweist, wobei die Seiten des Leiters (10) Lichtstrahlen (18) reflektieren, um sie in Richtung des Indexes (5) zu leiten.

6. Uhr (1) nach Anspruch 4 oder 5, **dadurch gekennzeichnet, dass** der Leiter (10) eine Oberseite (13) umfasst, die mit der oberen Abdeckung (9) verbunden, vorzugsweise mit der oberen Abdeckung (9) in dauerhaftem Kontakt ist.

7. Uhr (1) nach Anspruch 6, **dadurch gekennzeichnet, dass** es sich bei der Austrittsseite (15) um einen dem Index (5) gegenüberliegenden Teil der Oberseite (13) des Leiters (4) handelt.

8. Uhr (1) nach einem der Ansprüche 3 bis 7, **dadurch gekennzeichnet, dass** die Lichtquelle (6) einem Teil der Austrittsseite (12) gegenüberliegend eingerichtet ist, wobei das Lichtbündel (8) dazu bestimmt ist, von der Quelle (6) um eine im Wesentlichen zur Eintrittsseite (12) senkrechte stehende Achse herum projiziert zu werden.

9. Uhr (1) nach einem der vorstehenden Ansprüche, **dadurch gekennzeichnet, dass** der Leiter (10) eine unter dem Index (5) eingerichtete Struktur (16) zum Ablenken des Lichts umfasst, um einen Teil der Lichtstrahlen (18) in Richtung des Indexes (5) abzulenken.

10. Uhr (1) nach Anspruch 9 in Abhängigkeit von Anspruch 3, **dadurch gekennzeichnet, dass** die Ablenkstruktur (16) Prismen umfasst, die in der Unterseite (12) des Leiters (10) gebildet sind.

11. Uhr (1) nach einem der vorstehenden Ansprüche, **dadurch gekennzeichnet, dass** der Lichtleiter (10) fluoreszierende und/oder phosphoreszierende Pigmente umfasst, um im Inneren des Leiters (10) eine sekundäre Quelle (19) zu bilden.

12. Uhr (1) nach einem der vorstehenden Ansprüche, **dadurch gekennzeichnet, dass** der Lichtleiter (10) von einem einstückigen Material gebildet wird.

13. Uhr (1) nach Anspruch 11, **dadurch gekennzeichnet, dass** der Lichtleiter (10) aus mindestens zwei Blöcken (20, 21) gebildet ist, wobei die fluoreszierenden und/oder phosphoreszierenden Pigmente zwischen den Blöcken (20, 21) angeordnet sind.

14. Uhr (1) nach einem der vorstehenden Ansprüche, **dadurch gekennzeichnet, dass** die Lichtquelle (6) im Mittelteil (3) des Gehäuses (2) an einer dauerhaften Stelle in Bezug auf das Gehäuse (2) eingerichtet ist.

15. Uhr (1) nach einem der vorstehenden Ansprüche, **dadurch gekennzeichnet, dass** der Lichtleiter (10) mindestens zum Teil zwischen der Lichtquelle (6) und der oberen Abdeckung (9) eingerichtet ist.

16. Uhr (1) nach einem der vorstehenden Ansprüche, **dadurch gekennzeichnet, dass** das bewegliche Element (4) einen Filter (23) umfasst, der so eingerichtet ist, dass er die Helligkeit dämpfen oder je nach den Stellungen des Elements (4) das Farbspektrum verändern kann, wobei der Filter vorzugsweise zwischen der Quelle (6) und dem Lichtleiter (10) angeordnet ist.

## Claims

1. Timepiece (1), notably a diver's watch, comprising a case (2) provided with a case middle (3), a light source (6), an element (4) movable between several positions relative to the case (2), and movable means for assembling the movable element (4) on the middle part (3) of the case (2), the movable element (4) comprising a light guide (10) and an upper cover (9) comprising an index (5) the guide (10) being configured to receive a light beam (8) from the light source through an entry face (12), and to guide light rays (18) through an exit face (15) of the light guide (10) in order to illuminate the index (5), whatever the position of the movable element (4) relative to the case (2), the movable element (4) being an annular bezel mounted to rotate around the case middle (3).

2. Timepiece (1) according to claim 1, **characterized in that** the index (5) is formed of an opening made in the upper cover (9) to allow the passage of light from the exit face (15) of the guide (10) outside the movable element (4), said opening preferably being provided with a window.

3. Timepiece (1) according to claim 1 or 2, **characterized in that** the light guide (10) has a closed ring shape having a flat lower face forming the entry face (12) of the guide (10) and extending under the whole ring.

4. Timepiece (1) according to claim 3, **characterized in that** the light guide (10) has a rectangular cross-section, the faces of the guide (10) reflecting light rays (18) to guide them towards the index (5).

5. Timepiece (1) according to claim 3, **characterized in that** the light guide (10) has a circular cross-section, the faces of the guide (10) reflecting light rays (18) to guide them towards the index (5).

6. Timepiece (1) according to claim 4 or 5, **characterized in that** the guide (10) has an upper face (13) connected to the upper cover (9), preferably in permanent contact with the upper cover (9).

7. Timepiece (1) according to claim 6, **characterized in that** the exit face (15) is a part of the upper face (13) of the guide (10) facing the index (5).

8. Timepiece (1) according to any of claims 3 to 7, **characterized in that** the light source (6) is arranged facing a part of the entry face (12), the light beam (8) being intended to be projected from the source (6) around an axis substantially perpendicular to the entry face (12).

9. Timepiece (1) according to any of the preceding claims, **characterized in that** the guide (10) includes a light deflection structure (16) arranged underneath the index (5) to deflect a part of the light rays (18) towards the index (5).

10. Timepiece (1) according to claim 9 when dependent on claim 3, **characterized in that** the deflection structure (16) comprises prisms formed in a lower face (12) of the guide (10).

11. Timepiece (1) according to any of the preceding claims, **characterized in that** the light guide (10) contains fluorescent and/or phosphorescent pigments to form a secondary source (19) inside the guide (10).

12. Timepiece according to any of the preceding claims, **characterized in that** the light guide (10) is formed of a one-piece material.

13. Timepiece (1) according to claim 11, **characterized in that** the light guide (10) is formed of at least two blocks (20, 21), the fluorescent and/or phosphorescent pigments being placed between the blocks (20, 21).

14. Timepiece (1) according to any of the preceding claims, **characterized in that** the light source (6) is arranged in the middle part (3) of the case (2) in a permanent location with respect to the case (2).

15. Timepiece (1) according to any of the preceding claims, **characterized in that** the light guide (10) is arranged at least partly between the light source (6) and the upper cover (9).

16. Timepiece (1) according to any of the preceding claims, **characterized in that** the movable element (4) includes a filter (23) arranged to dim the brightness or to change the colour spectrum according to the positions of the element (4), the filter preferably being placed between the source (6) and the light guide (10).
